# EUROPEAN PATENT APPLICATION

(11) **EP 4 667 292 A1**
(43) Date of publication of application: **24.12.2025**
(21) Application number: 25184129.2
(22) Date of filing: 20.06.2025
(51) Int. Cl.: B60R 9/06, B60R 13/10

(54) **LICENSE PLATE STRUCTURE FOR A VEHICLE-MOUNTED BICYCLE**

(30) Priority: 21.06.2024 CN 202421428371 U; 29.04.2025 CN 202520849820 U
(71) Applicant: Wode Global (Qingdao) Outdoor Co., Ltd., Qingdao City Shandong Province (CN)
(72) Inventor: ZHAO, Yingchun, Shandong Provice (CN)
(74) Representative: Kluin Patent

(57) **Abstract**

This invention relates to the technical field of storing license plates for a vehicle-mounted bicycle, and specifically to a license plate structure for a vehicle-mounted bicycle. A first rotating arm and a second rotating arm are rotationally mounted in parallel and at intervals on a rear side of a clamping frame. The other ends of the first rotating arm and the second rotating arm are both rotationally mounted on a bracket. A connecting member for fixing the first rotating arm and the second rotating arm is disposed on the bracket. The advantageous effect is that the rotational installation of the clamping frame for the license plate is realized by providing a double rotating arm structure, and the bidirectional adjustable eccentric rotation of the clamping frame is realized under the rotation of the double rotating arms, thereby adapting to the folding direction of the bicycle frame and reducing the space occupied by folding storage.

## Description

### Technical Field

The present invention relates to the technical field of storing license plates for a vehicle-mounted bicycle, and specifically to a license plate structure for a vehicle-mounted bicycle.

### Background Art

Currently, in order to facilitate the use of bicycles, vehicle-mounted bicycles are usually disposed on vehicles such as cars or RVs. To ensure convenient transportation of bicycles and reduce the space they occupy, bicycles are usually designed to be foldable, thereby reducing space occupancy and improving utilization by folding the bicycle.

However, during the actual folding and storage process, the folding structure of the bicycle is an existing mature technology. But after the bicycle is folded, the installed license plate will rotate with the bicycle frame, and the length of the license plate position will protrude outside the space occupied by the bicycle after folding, making it impossible to achieve stable storage. At the same time, the license plate position is relatively fragile and easily deformed.

During the folding and storage of bicycles, existing technologies have significant drawbacks: the bicycle license plate is usually fixed to the bicycle frame. When the bicycle frame is folded, the license plate rotates with the bicycle frame, causing the length direction of the license plate to protrude beyond the outer contour of the bicycle after folding. This not only disrupts the neatness of the storage space and causes instability during vehicle fixation, but also causes the license plate structure to be relatively fragile and easily deformed during transportation vibrations, affecting subsequent use.

Regarding the problem of license plate fixation during folding, existing patent technologies (such as a clamping structure using a handle-linked double hook) achieve license plate clamping by pulling a handle to synchronously slide open two license plate hooks, and then using a compression spring to restore when the handle is released. However, this structure has obvious disadvantages: when the clamping frame needs to be flipped to adjust the position, the pulling action can easily trigger the handle linkage mechanism, leading to accidental loosening of the hooks and detachment of the license plate. In addition, the single-handle operation method with synchronous linkage relies on a single action to complete the double-hook clamping when clamping the license plate, which has a low fault tolerance rate and insufficient operational reliability.

To solve the above problems, the present invention proposes a license plate bracket flipping structure for a vehicle-mounted bicycle. By improving the license plate clamping method, the traditional single-handle linked double-hook structure is optimized into two independently operated hooks, i.e., each hook is pulled separately to achieve clamping, requiring two independent actions to complete clamping. This design avoids linkage misoperation caused by accidental touching of the handle when flipping the clamping frame, significantly improves the stability of license plate clamping and operational reliability, and effectively solves the technical problems of unstable license plate storage and easy detachment and deformation in existing technologies.

### Summary of the Invention

The objective of the present invention is to provide a license plate structure for a vehicle-mounted bicycle to solve the problems raised in the aforementioned prior art.

To achieve the above objective, the present invention provides the following technical solution:
A license plate structure for a vehicle-mounted bicycle, comprising a clamping frame, wherein the front side of the clamping frame is provided with an elastic clamping component for clamping a license plate. The rear side of the clamping frame is rotationally mounted on a bracket. A first rotating arm and a second rotating arm are rotationally mounted in parallel and at intervals on the rear side of the clamping frame. The other ends of the first rotating arm and the second rotating arm are both rotationally mounted on the bracket, and a connecting member for fixing the first rotating arm and the second rotating arm is disposed on the bracket.

Preferably, an end of the first rotating arm and an end of the second rotating arm are rotationally mounted on the clamping frame through a fourth hinge seat and a second hinge seat respectively. The other ends of the first rotating arm and the second rotating arm are rotationally mounted on the bracket through a first hinge seat and a third hinge seat respectively, and the first hinge seat, the fourth hinge seat, the third hinge seat, and the second hinge seat are sequentially distributed from left to right.

Preferably, the connecting member comprises a limiting pin. A stepped through-hole is formed in the bracket. The limiting pin is elastically inserted into the stepped through-hole. A positioning through-hole is formed at a position of the first rotating arm corresponding to the stepped through-hole, and an end part of the limiting pin is inserted into the positioning through-hole.

Preferably, the connecting member further comprises a limiting slider. A sliding groove extending to the upper ends of the second rotating arm and the first rotating arm is disposed on the upper end of the bracket. A fixed sealing plate is disposed on the upper end of the sliding groove. The limiting slider is elastically and slidably disposed in the sliding groove, and a side block extending to the outside of the sliding groove and abutting the upper end surfaces of the second rotating arm and the first rotating arm is disposed on a side of the limiting slider.

Preferably, a second spring is pressed between the limiting slider and the inner wall of the sliding groove. The upper end of the sliding groove is sealed by the fixed sealing plate, and the fixed sealing plate is provided with a long groove for accommodating the limiting slider to enable positioning and sliding. The extension direction of the long groove is the same as the compression direction of the second spring.

Preferably, an elliptical block is provided in the middle section of the limiting pin. An elliptical hole is formed on the inner wall of the stepped through-hole near the end corresponding to the positioning through-hole. A limiting cover is disposed at the other end opening of the stepped through-hole. The limiting pin is inserted into the stepped through-hole. An elastic member is sleeved on the limiting pin and pressed between the limiting cover and the elliptical block, and the elliptical block on the limiting pin can slide and insert along the elliptical hole.

Preferably, a clamping block is installed on the rear side of the clamping frame in an elastically liftable manner. A guide groove is provided through the clamping frame. An upwardly folded and bent flange is disposed on the upper end of the clamping block. The flange extends along the guide groove to the front side of the clamping frame, and a mounting recess for mounting a license plate is disposed at the front side of the clamping frame. The flange extends along the guide groove into the mounting recess and tightly clamps the license plate.

Preferably, the elastic clamping component comprises a clamping block, a clamping beam, and side frames. A pair of side frames are symmetrically arranged on the rear side of the clamping frame. A limiting seat for limiting the lowering height of the clamping block is disposed on the side frame. A first spring is pressed between the lower end of each clamping block and the limiting seat, and a pair of clamping blocks distributed on the left and right are connected to two ends of the clamping beam.

According to an aspect of the present invention, a license plate structure for a vehicle-mounted bicycle capable of achieving the foregoing and other objectives and advantages comprises a clamping frame, a mounting mechanism, and a license plate fixing mechanism disposed on the clamping frame, wherein the clamping frame is provided with a mounting recess for accommodating a license plate, the license plate fixing mechanism is used for detachably fixing the license plate to the mounting recess of the clamping frame, and the mounting mechanism is disposed back-to-back on the other side of the mounting recess of the clamping frame for mounting the license plate structure for a vehicle-mounted bicycle on a bicycle frame.

According to an embodiment of the present application, the license plate fixing mechanism comprises at least two elastic clamping components, wherein the elastic clamping components are arranged at intervals on the back of the clamping frame, and the elastic clamping components extend from the back of the clamping frame to the mounting recess of the clamping frame, and the license plate is fixed in the mounting recess by the elastic clamping components.

According to an embodiment of the present application, the two elastic clamping components of the license plate fixing mechanism are spaced apart from each other and are independent of each other, and when operating the license plate fixing mechanism, the elastic clamping components need to be operated separately and independently.

According to an embodiment of the present application, the elastic clamping components are arranged at an upper end portion or a lower end portion of the clamping frame, or the elastic clamping components are arranged at a left side end portion or a right side end portion of the clamping frame.

According to an embodiment of the present application, each elastic clamping component comprises a side frame, a clamping block arranged on the side frame, and a first spring, wherein the first spring and the clamping block have a pre-tightened elastic force. An end of the clamping block is arranged in a track of the side frame, and the clamping block can move back and forth (up and down) along the track of the side frame within the side frame. The other end of the clamping block extends into the mounting recess of the clamping frame, corresponding to the license plate to be installed, for limiting the movement of the license plate.

According to an embodiment of the present application, the elastic clamping component and the clamping frame form an adjustable mounting recess, and the license plate can be detachably installed in the mounting recess.

According to an embodiment of the present application, the clamping frame further comprises a clamping frame main body and a limiting protrusion arranged on the clamping frame main body, wherein the limiting protrusion is arranged on a side opposite to the clamping block, for limiting the displacement of the license plate.

According to an embodiment of the present application, the limiting protrusion is a fixing mechanism formed on an inner side of the mounting recess, and the limiting protrusion of the clamping frame is directly opposite to the clamping blocks.

According to an embodiment of the present application, the elastic clamping component further comprises an operating rod and an operating handle connected to the operating rod, wherein the operating handle is connected to the operating rod, and the operating rod is connected to the clamping block, for driving the connected clamping block to move within the side frame through the operating handle and the operating rod.

According to an embodiment of the present application, the mounting mechanism comprises a bracket, and a limiting pin disposed on the bracket, and the mounting mechanism is fixed at a corresponding position of the vehicle frame by the limiting pin.

According to an embodiment of the present application, it further comprises a rotating mechanism, wherein the rotating mechanism is pivotally arranged on the clamping frame, and the rotating mechanism is connected to the mounting mechanism, allowing the mounting mechanism and the clamping frame to rotate through the rotating mechanism, wherein the rotating mechanism comprises a first rotating arm and a second rotating arm, wherein the first rotating arm and the second rotating arm are pivotally arranged on the back of the clamping frame, and the first rotating arm and the second rotating arm are arranged in parallel, and when rotating, the first rotating arm and the second rotating arm rotate simultaneously to maintain the stability of the rotation of the mounting mechanism and the clamping frame.

According to an embodiment of the present application, the clamping frame further comprises a first hinge seat, a second hinge seat, a third hinge seat, and a fourth hinge seat, wherein the first hinge seat is disposed between an end of the first rotating arm and the clamping frame, allowing relative rotation between the first rotating arm and the clamping frame; the second hinge seat is disposed between the first rotating arm and the mounting mechanism, allowing relative rotation between the first rotating arm and the mounting mechanism; the third hinge seat is disposed between the second rotating arm and the clamping frame, allowing rotation between the second rotating arm and the clamping frame; and the fourth hinge seat is disposed between the second rotating arm and the mounting mechanism, allowing relative rotation between the second rotating arm and the mounting mechanism.

According to an embodiment of the present application, the first hinge seat, the second hinge seat, the third hinge seat, and the fourth hinge seat are sequentially arranged at the back of the clamping frame.

According to an embodiment of the present application, it further comprises a limiting slider, wherein the limiting slider is disposed in a mounting slot of the mounting mechanism, and at least a part of the structure of the limiting slider protrudes outside the mounting slot, and when the license plate structure for a vehicle-mounted bicycle is in an unfolded state, the limiting slider can limit the relative rotation of the clamping frame and the mounting mechanism.

According to an embodiment of the present application, the limiting slider comprises a limiting piece and a limiting spring, wherein the limiting piece and the limiting spring are in contact with each other, and the limiting spring applies a pre-tightening force to the limiting piece, so that the limiting piece automatically returns to an initial position.

Compared with the prior art, the beneficial effects of the present invention are:
The present invention realizes the rotational installation of the clamping frame for license plate by providing a double rotating arm structure, and realizes the bidirectional adjustable eccentric rotation of the clamping frame under the rotation of the double rotating arms, thereby adapting to the folding direction of the bicycle frame and reducing the space occupied by folding storage.

### Brief Description of Drawings

FIG. 1 is a schematic structural diagram of the present invention;
FIG. 2 is a rear view of the present invention;
FIG. 3 is a schematic diagram of the rotating mounting structure for the rotating arms of the present invention;
FIG. 4 is a schematic structural diagram of a fixing structure for the first rotating arm of the present invention;
FIG. 5 is a schematic structural diagram of a fixing structure for the second rotating arm of the present invention;
FIG. 6 is a schematic structural diagram of a mounting structure for the elastic clamping component of the present invention;
FIG. 7 is a schematic structural diagram of the present invention after folding;
FIG. 8 is a schematic overall structural diagram of a license plate structure for a vehicle-mounted bicycle according to another preferred embodiment of the present invention;
FIG. 9A is a schematic structural diagram of the license plate structure for a vehicle-mounted bicycle according to the above another preferred embodiment of the present invention in an unfolded state;
FIG. 9B is a schematic structural diagram of the license plate structure for a vehicle-mounted bicycle according to the above another preferred embodiment of the present invention in a folded state; and
FIG. 10 is an exploded schematic diagram of the license plate structure for a vehicle-mounted bicycle according to the above another preferred embodiment of the present invention.

### Detailed Embodiments

The technical solutions in the embodiments of the present invention will be clearly and completely described below in conjunction with the accompanying drawings in the embodiments of the present invention. Obviously, the described embodiments are only a part of the embodiments of the present invention, rather than all of the embodiments. Based on the embodiments in the present invention, all other embodiments obtained by those of ordinary skill in the art without inventive efforts shall fall within the protection scope of the present invention.

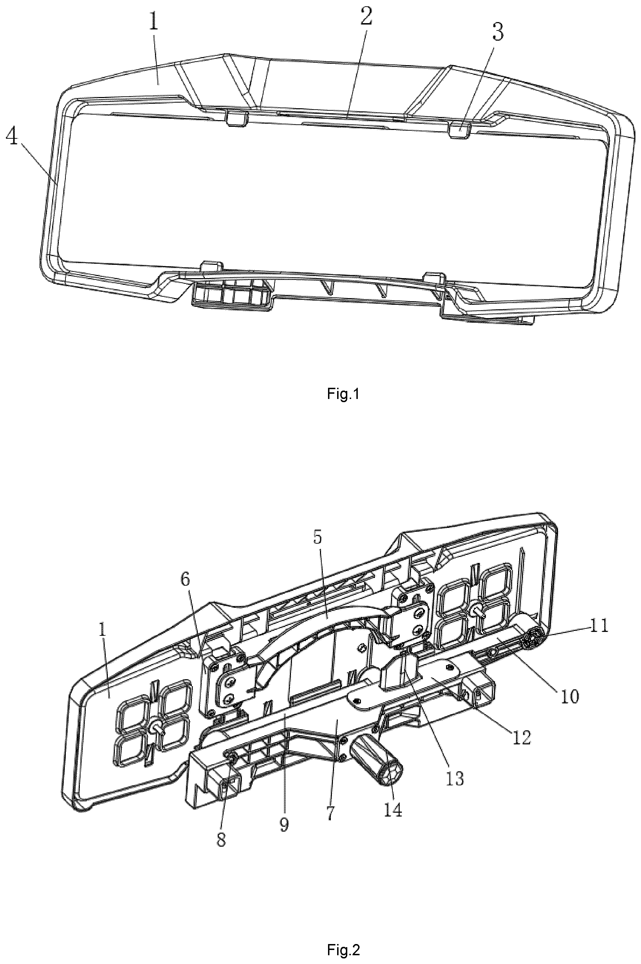

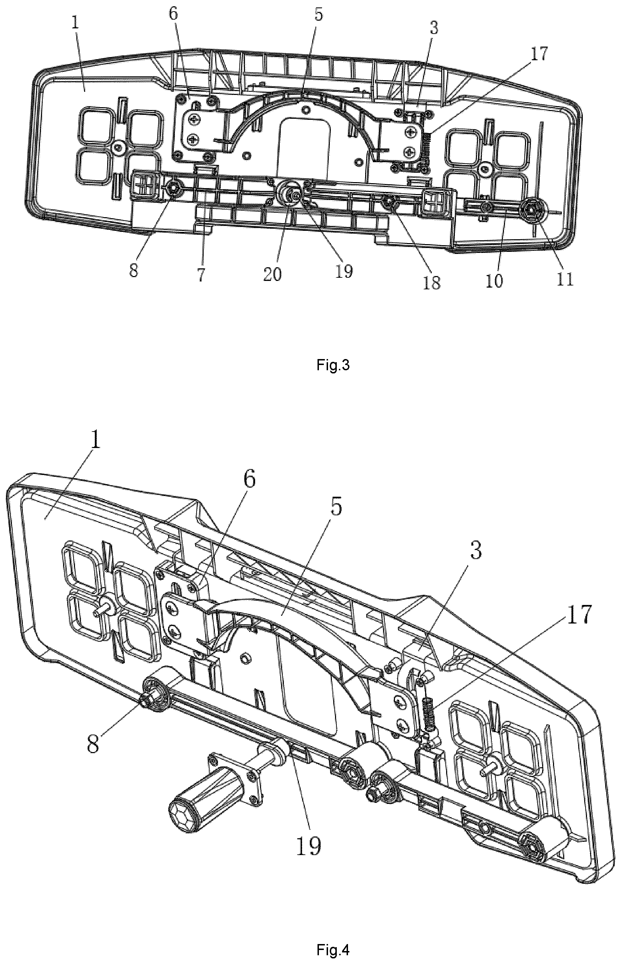

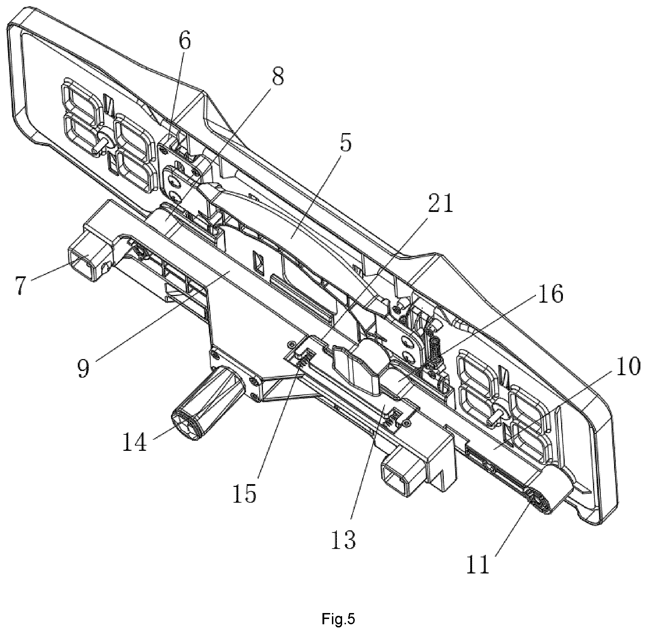

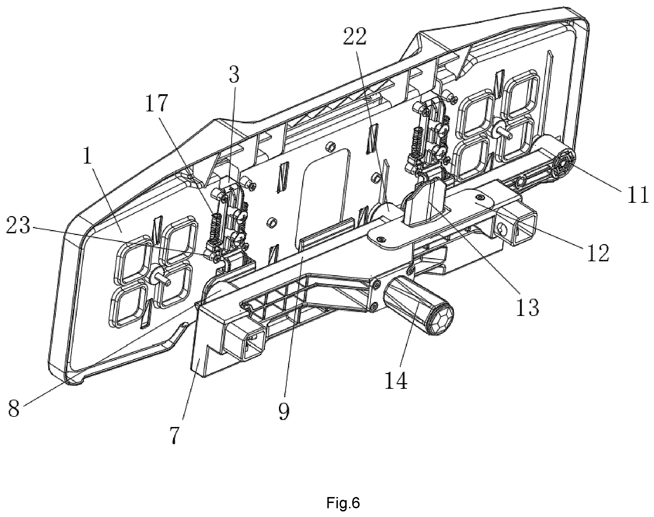

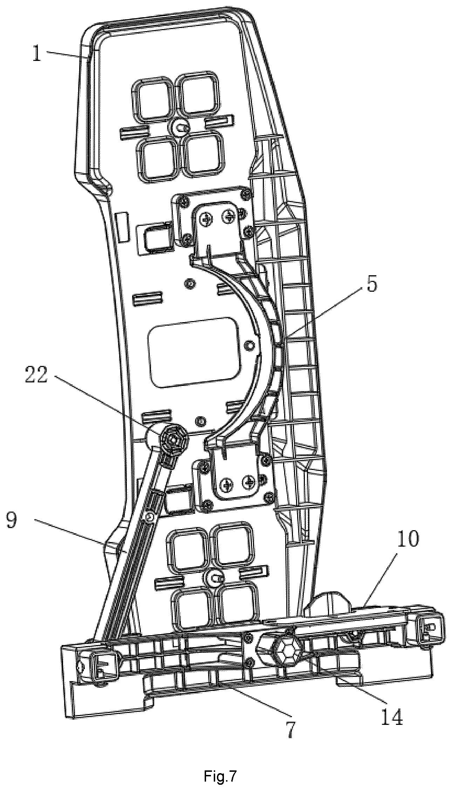

Please refer to FIGS. 1 to 7. The present invention provides technical solutions:
A license plate structure for a vehicle-mounted bicycle, comprising a clamping frame 1. The front side of the clamping frame 1 is provided with an elastic clamping component for clamping a license plate. A clamping block 3 is mounted on the rear side of the clamping frame 1 in an elastically liftable manner. A guide groove is provided through the clamping frame 1. A folded downward and bent flange is disposed on the upper end of the clamping block 3. The flange extends along the guide groove to the front side of the clamping frame 1, and a mounting recess 4 for mounting a license plate is disposed at the front side of the clamping frame 1. The flange extends along the guide groove into the mounting recess 4 and tightly clamps the license plate. The elastic clamping component comprises clamping blocks 3, a clamping beam 5, and side frames 6. A pair of side frames 6 are symmetrically arranged on the rear side of the clamping frame 1. A limiting seat 23 for limiting the lowering height of the clamping block 3 is disposed on the side frame 6. A first spring 17 is pressed between the lower end of the clamping block 3 and the limiting seat 23, and a pair of clamping blocks 3 distributed on the left and right are connected to two ends of the clamping beam 5.

By providing the mounting recess 4, the positioning and mounting of the license plate are realized, and then the elastic mounting of the clamping block 3 is realized by the first spring 17. The convenient adjustment and synchronous movement of the pair of clamping blocks 3 distributed on the left and right are realized by the clamping beam 5 connecting the pair of clamping blocks 3. The lower end position of the clamping block 3 is limited by the side frame 6 and the limiting seat 23, preventing detachment. Therefore, before mounting the license plate, the clamping beam 5 is pulled to move the flanges on the clamping blocks 3 upward, facilitating the mounting of the license plate. After mounting, under the elastic restoring force of the first spring 17, the flanges press on the upper end of the license plate to achieve the purpose of fixing the license plate.

The rear side of the clamping frame 1 is rotatably mounted on the bracket 7. A first rotating arm 9 and a second rotating arm 10 are rotatably mounted in parallel and at intervals on the rear side of the clamping frame 1, and the other ends of the first rotating arm 9 and the second rotating arm 10 are both rotatably mounted on the bracket 7. An end of the first rotating arm 9 and an end of the second rotating arm 10 are rotatably mounted on the clamping frame 1 through a fourth hinge seat 22 and a second hinge seat 11 respectively, and the other ends of the first rotating arm 9 and the second rotating arm 10 are rotatably mounted on the bracket 7 through a first hinge seat 8 and a third hinge seat 18 respectively, and the first hinge seat 8, the fourth hinge seat 22, the third hinge seat 18, and the second hinge seat 11 are sequentially distributed from left to right.

By setting four sets of hinge seats, the rotatable mounting of the first rotating arm 9 and the second rotating arm 10 is realized. Then, when folding and storing is required, the first rotating arm 9 and the second rotating arm 10 rotate upward along the bracket 7, so that the clamping frame 1 is in a vertical state at the front side of the bracket 7, and at this time, the length of the clamping frame 1 at the upper end of the bracket 7 is greater than the length of the lower end.

When the first rotating arm 9 and the second rotating arm 10 rotate downward along the bracket 7, the length of the clamping frame 1 at the lower end of the bracket is greater than the length of the upper end, so that the extension direction of the clamping frame 1 after rotation can be bidirectionally adjusted according to the folding direction of the bracket 7, adapting to the folding storage of the bicycle, and further reducing the occupied space after storage.

A connecting member for fixing the first rotating arm 9 and the second rotating arm 10 is disposed on the bracket 7. The connecting member comprises a limiting pin 14. A stepped through-hole 20 is formed in the bracket 7. The limiting pin 14 is elastically inserted into the stepped through-hole 20. A positioning through-hole 19 is formed at a position of the first rotating arm 9 corresponding to the stepped through-hole 20. An end part of the limiting pin 14 is inserted into the positioning through-hole 19. An elliptical block is provided in the middle section of the limiting pin 14. An elliptical hole is formed on the inner wall of the stepped through-hole 20 near the end corresponding to the positioning through-hole 19. A limiting cover is disposed at the other end opening of the stepped through-hole 20. The limiting pin 14 is inserted into the stepped through-hole 20. An elastic member is sleeved on the limiting pin 14 and pressed between the limiting cover and the elliptical block. The elliptical block on the limiting pin 14 can slide and insert along the elliptical hole.

By providing the elastic member, the elastic mounting of the limiting pin 14 is realized, and then the limiting fixation of the first rotating arm 9 is realized by the insertion of the limiting pin 14 into the positioning through-hole 19. The elastic mounting of the limiting pin 14 keeps its elastic insertion into the positioning through-hole 19, avoiding detachment. When folding and storage is required, the limiting pin 14 is pulled outward so that the elliptical block extends to the exterior of the front end of the elliptical hole, and then the limiting pin 14 is rotated so that the elliptical block and the elliptical hole are misaligned and pressed, achieving the purpose of maintaining the position of the limiting pin 14.

The connecting member further comprises a limiting slider 13. A sliding groove extending to the upper ends of the second rotating arm 10 and the first rotating arm 9 is disposed on the upper end of the bracket 7. A fixed sealing plate 12 is disposed on the upper end of the sliding groove. The limiting slider 13 is elastically and slidably disposed in the sliding groove. A side block 21 extending to the outside of the sliding groove and abutting the upper end surfaces of the second rotating arm 10 and the first rotating arm 9 is disposed on a side of the limiting slider 13. A second spring 15 is pressed between the limiting slider 13 and the inner wall of the sliding groove. The upper end of the sliding groove is sealed by the fixed sealing plate 12, and the fixed sealing plate 12 is provided with a long groove for accommodating the limiting slider 13 to enable positioning and sliding, and the extension direction of the long groove is the same as the compression direction of the second spring 15.

By providing the second spring 15, the elastic mounting of the limiting slider 13 is realized. Then, under the elastic pressing of the second spring 15, the side block 21 extends to the upper ends of the first rotating arm 9 and the second rotating arm 10, achieving the purpose of limiting the rotation angle. During folding and storage, the limiting slider 13 is pushed to compress the second spring 15, so that the side block 21 extends into the sliding groove, facilitating the rotation and folding of the first rotating arm 9 and the second rotating arm 10.

Working Principle: First, before mounting the license plate, the clamping beam 5 is pulled to move the flange on the clamping block 3 upward, facilitating the mounting of the license plate. After mounting, under the elastic restoring force of the first spring 17, the flange presses on the upper end of the license plate to achieve the purpose of fixing the license plate.

At this time, the limiting pin 14 inserts into the positioning through-hole 19, realizing the limiting fixation of the first rotating arm 9. Under the elastic pressing of the second spring 15, the side block 21 extends to the upper ends of the first rotating arm 9 and the second rotating arm 10, achieving the purpose of limiting the rotation angle, and ensuring the stable installation of the clamping frame 1 on the bracket 7.

When folding and storage is required, the limiting pin 14 is pulled outward so that the elliptical block extends to the exterior of the front end of the elliptical hole, and then the limiting pin 14 is rotated so that the elliptical block and the elliptical hole are misaligned and pressed, achieving the purpose of maintaining the position of the limiting pin 14. The limiting slider 13 is pushed to compress the second spring 15, so that the side block 21 extends into the sliding groove, facilitating the rotation and folding of the first rotating arm 9 and the second rotating arm 10.

The first rotating arm 9 and the second rotating arm 10 rotate upward along the bracket 7, so that the clamping frame 1 is in a vertical state at the front side of the bracket 7, and at this time, the length of the clamping frame 1 at the upper end of the bracket 7 is greater than the length of the lower end. When the first rotating arm 9 and the second rotating arm 10 rotate downward along the bracket 7, the length of the clamping frame 1 at the lower end of the bracket 7 is greater than the length of the upper end, so that the extension direction of the clamping frame 1 after rotation can be bidirectionally adjusted according to the folding direction of the bicycle frame, adapting to the folding storage of the bicycle, and further reducing the occupied space after storage.

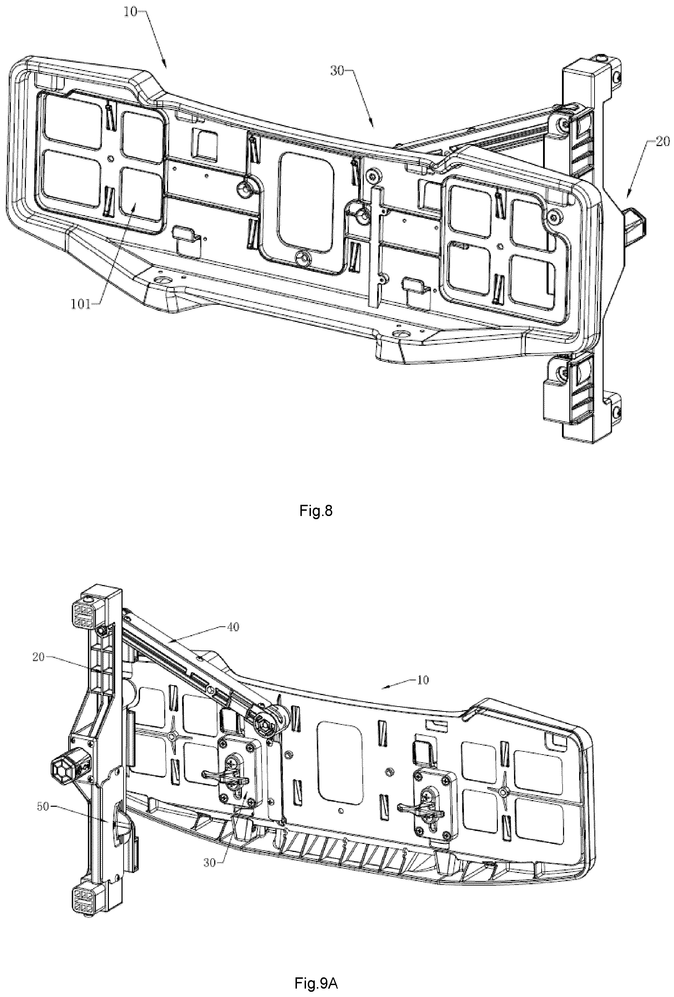

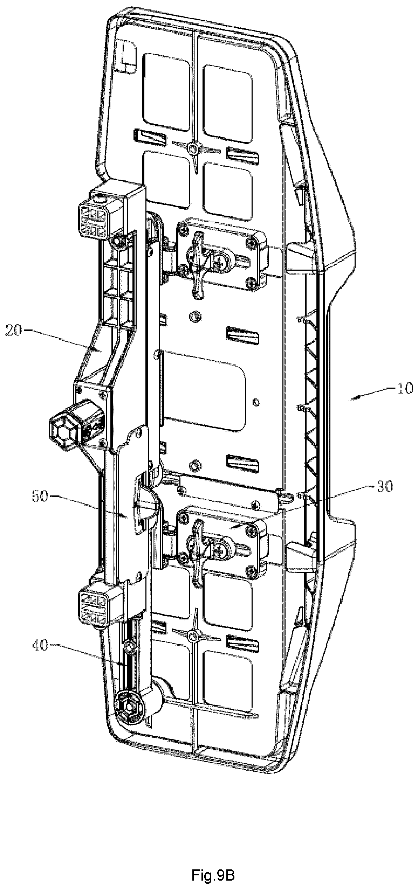

Referring to FIGS. 8 to 10 of the present application, a license plate structure for a vehicle-mounted bicycle according to another preferred embodiment of the present application is explained in the following description. The license plate structure for a vehicle-mounted bicycle comprises a clamping frame 1, a mounting mechanism, and a license plate fixing mechanism disposed on the clamping frame 1, wherein the clamping frame 1 is provided with a mounting recess 4 for accommodating a license plate, and the license plate fixing mechanism is used for detachably fixing the license plate to the mounting recess 4 of the clamping frame. The mounting mechanism is disposed back-to-back on the other side of the mounting recess 4 of the clamping frame 1, for mounting the license plate structure for a vehicle-mounted bicycle on a bicycle frame.

The license plate fixing mechanism comprises at least two elastic clamping components, wherein the elastic clamping components are arranged at intervals on the back of the clamping frame 1, and the elastic clamping components extend from the back of the clamping frame 1 to the mounting recess 4 of the clamping frame 1, and the license plate is fixed in the mounting recess 4 by the elastic clamping components.

It is worth mentioning that, in this preferred embodiment of the present application, the two elastic clamping components of the license plate fixing mechanism are spaced apart from each other and are independent of each other, that is, when operating the license plate fixing mechanism, the elastic clamping components need to be operated separately and independently, so as to avoid misoperation that causes the license plate to fall off, thereby reducing the risk of operational errors.

In this preferred embodiment of the present application, the elastic clamping components are arranged at an upper end portion or a lower end portion of the clamping frame 1, or the elastic clamping components are arranged at a left side end portion or a right side end portion of the clamping frame 1. The present application does not impose limitations thereon.

Each elastic clamping component comprises a side frame 6, a clamping block 3 arranged on the side frame 6, and a first spring 17, wherein the first spring 17 and the clamping block 3 have a pre-tightened elastic force. An end of the clamping block 3 is arranged in a track of the side frame 6, and the clamping block 3 can move back and forth (up and down) along the track of the side frame 6 within the side frame 6. The other end of the clamping block 3 extends into the mounting recess 4 of the clamping frame 1, corresponding to the license plate to be installed, for limiting the movement of the license plate.

The elastic clamping components and the clamping frame 1 form an adjustable mounting recess, and the license plate can be detachably installed in the mounting recess.

It can be understood that the clamping block 3 of each elastic clamping component can move along the track within the respective side frame 6, realizing the opening and closing of the elastic clamping component. When the clamping block 3 is moved so that the mounting recess 4 is opened, the clamping block 3 compresses the first spring 17, and the license plate can be installed into or removed from the mounting recess 4. When the first spring 17 compresses the clamping block 3 to move, and the clamping block 3 returns to the initial position under elastic action, the space within the mounting recess 4 is compressed, and the license plate is fixed in the mounting recess 4 by the elastic clamping component and the clamping frame 1.

The clamping frame 1 further comprises a clamping frame main body and a limiting protrusion arranged on the clamping frame main body, wherein the limiting protrusion is arranged on a side opposite to the clamping block 3, for limiting the displacement of the license plate.

It is worth mentioning that, in this preferred embodiment of the present application, the limiting protrusion is a fixing mechanism formed on an inner side of the mounting recess 4. Preferably, the limiting protrusion of the clamping frame 1 is directly opposite to the clamping blocks 3.

Each elastic clamping component further comprises an operating rod 314 and an operating handle 315 connected to the operating rod 314. The operating handle 315 is connected to the operating rod 314, and the operating rod 314 is connected to the clamping block 3, for driving the connected clamping block 3 to move within the side frame 6 through the operating handle 315 and the operating rod 314.

As shown in FIG. 8, the mounting mechanism of the license plate structure for a vehicle-mounted bicycle comprises a bracket 7, and a limiting pin 14 disposed on the bracket 7. The mounting mechanism is fixed at a corresponding position of the vehicle frame by the limiting pin 14.

The license plate structure for a vehicle-mounted bicycle further comprises a rotating mechanism, wherein the rotating mechanism is pivotally arranged on the clamping frame 1, and the rotating mechanism is connected to the mounting mechanism, allowing the mounting mechanism and the clamping frame 1 to rotate through the rotating mechanism. The rotating mechanism comprises a first rotating arm 9 and a second rotating arm 10, wherein the first rotating arm 9 and the second rotating arm 10 are pivotally arranged on the back of the clamping frame 1, and the first rotating arm 9 and the second rotating arm 10 are arranged in parallel, and when rotating, the first rotating arm 9 and the second rotating arm 10 rotate simultaneously to maintain the stability of the rotation of the mounting mechanism and the clamping frame 1.

The clamping frame 1 further comprises a first hinge seat 8, a second hinge seat 11, a third hinge seat 18, and a fourth hinge seat 22, wherein the first hinge seat 8 is disposed between an end of the first rotating arm 9 and the clamping frame 1, allowing relative rotation between the first rotating arm 9 and the clamping frame 1; the second hinge seat 11 is disposed between the first rotating arm 9 and the mounting mechanism, allowing relative rotation between the first rotating arm 9 and the mounting mechanism; the third hinge seat 18 is disposed between the second rotating arm 10 and the clamping frame 1, allowing rotation between the second rotating arm 10 and the clamping frame 1; and the fourth hinge seat 22 is disposed between the second rotating arm 10 and the mounting mechanism, allowing relative rotation between the second rotating arm 10 and the mounting mechanism.

Preferably, in this preferred embodiment of the present application, the first hinge seat 8, the second hinge seat 11, the third hinge seat 18, and the fourth hinge seat 22 are sequentially arranged at the back of the clamping frame 1.

It is worth mentioning that, by setting four sets of hinge seats, the rotatable mounting of the first rotating arm 9 and the second rotating arm 10 is realized. Then, when folding and storage is required, the first rotating arm 9 and the second rotating arm 10 rotate upward along the mounting mechanism, so that the clamping frame 1 is in a vertical state at the front side of the mounting mechanism, and at this time, the length of the clamping frame 1 at the upper end of the mounting mechanism is greater than the length of the lower end; when unfolding is required, the first rotating arm 9 and the second rotating arm 10 are rotated in the opposite direction, so that the clamping frame 1 is parallel to the mounting mechanism.

The license plate structure for a vehicle-mounted bicycle further comprises a limiting slider 13, wherein the limiting slider 13 is disposed in a mounting slot of the mounting mechanism, and at least a part of the structure of the limiting slider 13 protrudes outside the mounting slot, and when the license plate structure for a vehicle-mounted bicycle is in an unfolded state, the limiting slider 13 can limit the relative rotation of the clamping frame 1 and the mounting mechanism.

The limiting slider 13 comprises a limiting piece 51 and a limiting spring 52, wherein the limiting piece 51 and the limiting spring 52 are in contact with each other, and the limiting spring 52 applies a pre-tightening force to the limiting piece 51, so that the limiting piece 51 automatically returns to an initial position.

It is worth mentioning that the license plate fixing mechanism of the present invention adopts a split design, including two independently operated elastic clamping components, each component consisting of a side frame 6, a clamping block 3, a first spring 17, an operating rod 314, and an operating handle 315.

The structure of linking two clamping blocks with a single operating handle in other embodiments has been modified to two independent components. Each clamping block 3 is driven by an operating handle 315 to move the respective operating rod 314 independently. To unlock the license plate, the handles on both sides need to be pulled separately, avoiding overall detachment due to accidental touching of a single handle when flipping the clamping frame.

The track of the clamping block 3 is provided with a limiting boss (not shown), ensuring that it can only slide along a predetermined direction within the side frame 6, and the pre-tightening force of the first spring 17 (e.g., a compression spring) acts independently on each clamping block, ensuring restoring accuracy.

The operating handle 315 adopts a recessed installation, embedded in the groove of the clamping frame 1. It needs to be pulled outward to trigger the displacement of the clamping block 3, reducing the risk of accidental unlocking caused by vehicle vibration or external impact.

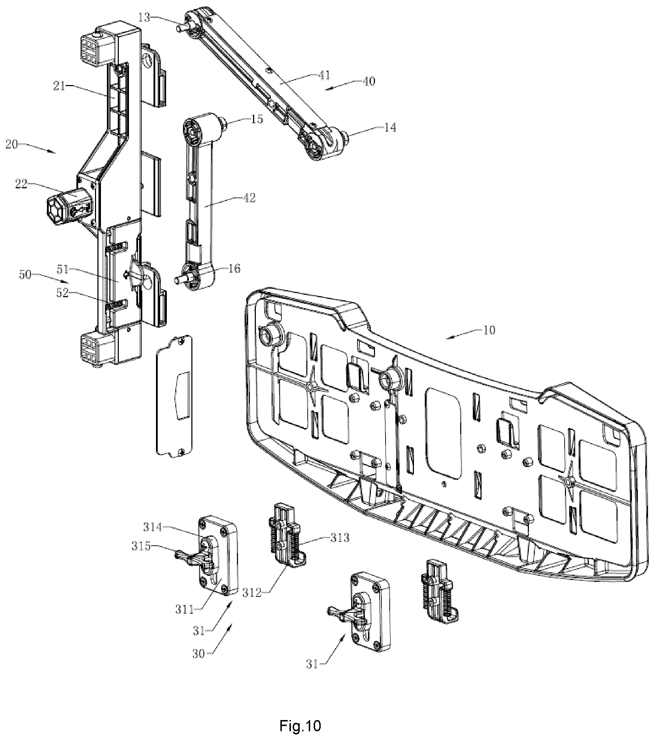

The contact surface between the clamping block 3 and the license plate is provided with anti-slip patterns (refer to FIG. 10), combined with the rubber layer of the limiting protrusion, forming a bidirectional friction force, which can maintain part of the clamping force even if a single side operation fails.

The hinge points of the first rotating arm 9 and the second rotating arm 10 are fixed at multiple angle positions by fastening bolts, ensuring that the clamping frame 1 remains parallel to the mounting mechanism when unfolded, avoiding obscuring the license plate. A damping module (not shown) is added inside the hinge seats to provide progressive resistance during flipping, preventing inertial shaking of the clamping frame due to rapid operation.

The limiting piece 51 of the limiting slider 13 is linked with the rotating mechanism. When the clamping frame 1 is unfolded to a horizontal state, the limiting spring 52 pushes the limiting piece 51 into the slot of the mounting mechanism, forming a mechanical lock. Unlocking requires pressing the limiting pieces 51 on both sides simultaneously, further reducing the probability of accidental touching.

Through the above improvements, this structure completely solves the hidden danger of misoperation during the flipping process while maintaining the convenience of the original patent, and meets the mandatory requirements of traffic safety regulations for license plate stability.

In this preferred embodiment of the present application, the two elastic clamping components of the license plate fixing mechanism adopt an independently operated structural design, which is different from traditional linkage clamping mechanisms (for example, structures that link multiple clamping blocks through a single handle). Specifically, the two elastic clamping components are spaced apart from each other and have no mechanical linkage relationship, that is, each elastic clamping component is configured with an independent operating handle 315 and driving structure (such as an operating rod 314), and the user needs to operate each elastic clamping component individually (for example, pressing or pulling the corresponding operating handle 315 separately) to achieve the installation or removal of the license plate.

It is worth noting that traditional vehicle-mounted clamping frames often adopt a linkage clamping structure (for example, simultaneously driving multiple clamping blocks to open or close through a single operating handle). Such structures are prone to clamping block malfunction due to vibration or external forces (such as accidental touching of the operating handle when flipping the clamping frame) during vehicle travel, which can lead to license plate detachment. However, the present application, by designing the elastic clamping components to be independently operated, ensures that the movement of each clamping block 3 is only controlled by the corresponding operating handle 315, avoiding chain misoperations caused by a single operation. For example, when the clamping frame 1 needs to be flipped (by adjusting the angle through the rotating mechanism), even if one of the operating handles 315 is displaced due to touching, the other elastic clamping component still maintains stable clamping of the license plate, thereby significantly improving the reliability of license plate fixation.

Each elastic clamping component further comprises an independent operating rod 314 and an operating handle 315, wherein the operating handle 315 is connected to the operating rod 314 in a one-to-one correspondence, and the operating rod 314 only drives the corresponding clamping block 3 to move within the side frame 6. In other words, the operating handle 315 of each elastic clamping component is an independent component and requires separate force to compress the first spring 17 and release the clamping block 3 from the license plate limiting position. When the license plate needs to be installed, the user needs to pull both operating handles 315 separately to make the corresponding clamping blocks 3 open synchronously (or asynchronously), put the license plate into the mounting recess 4, and then release the operating handles 315. The first spring 17 drives the clamping blocks 3 to restore and clamp the license plate. When disassembling, both handles need to be operated separately again to ensure that the clamping force on both sides of the license plate is independently released, avoiding the risk of the license plate falling off due to single operation failure.

It is worth mentioning that the limiting protrusion on the inner side of the main body of the clamping frame forms a bidirectional limiting structure with the clamping blocks 3 of the elastic clamping components: the limiting protrusion is fixedly arranged on a side of the mounting recess 4 (e.g., the left or upper side), and the clamping blocks 3 are elastically pressed against the opposite side of the mounting recess 4 (e.g., the right or lower side). Since the two elastic clamping components act independently, the upper or lower sides or the left or right sides of the license plate can be respectively clamped by the corresponding clamping block 3 and the limiting protrusion. Even if one clamping block is briefly loosened due to misoperation, the other clamping block can still maintain the limiting of the license plate by elastic force, thereby effectively solving the hidden safety hazard of traditional linkage structures where a single touch can cause immediate loosening.

**It** can be understood that since the license plate fixing mechanism adopts an independent clamping design, when the clamping frame 1 is folded or unfolded by the rotating mechanism, there is no need to worry about the operation of the rotating action interfering with the clamping state of the license plate, further improving the practicality and reliability of the overall structure.

Although embodiments of the present invention have been shown and described, for those of ordinary skill in the art, it can be understood that various changes, modifications, substitutions, and variations can be made to these embodiments without departing from the principles and spirit of the present invention, and the scope of the present invention is defined by the appended claims and their equivalents.

### Reference numerals

- 1: clamping frame
- 2: lighting component
- 3: clamping block
- 4: mounting recess
- 5: clamping beam
- 6: side frame
- 7: frame
- 8: first hinge seat
- 9: first rotating arm
- 10: second rotating arm
- 11: second hinge seat
- 12: fixed sealing plate
- 13: limiting slider
- 14: limiting pin
- 15: second spring
- 17: first spring
- 18: third hinge seat
- 19: positioning through-hole
- 20: stepped through-hole
- 21: side block
- 22: fourth hinge seat
- 23: limiting seat
- 314: operating rod
- 315: operating handle
- 51: limiting piece
- 52: limiting spring

## Claims

1. A license plate structure for a vehicle-mounted bicycle, **characterized by** comprising a clamping frame (1), a mounting mechanism, and a license plate fixing mechanism disposed on the clamping frame (1), wherein the clamping frame (1) is provided with a mounting recess for accommodating a license plate, wherein the license plate fixing mechanism is used for detachably fixing the license plate to the mounting recess of the clamping frame (1), and the mounting mechanism is disposed back-to-back on the other side of the mounting recess of the clamping frame (1) for mounting the license plate structure for a vehicle-mounted bicycle on a bicycle frame.

2. The license plate structure for a vehicle-mounted bicycle according to claim 1, further comprising a rotating mechanism, wherein the rotating mechanism is pivotally arranged on the clamping frame (1), and the rotating mechanism is connected to the mounting mechanism, allowing the mounting mechanism and the clamping frame (1) to rotate through the rotating mechanism, wherein the rotating mechanism comprises a first rotating arm and a second rotating arm, wherein the first rotating arm and the second rotating arm are pivotally arranged on the back of the clamping frame (1), and the first rotating arm and the second rotating arm are arranged in parallel, and when rotating, the first rotating arm and the second rotating arm rotate simultaneously to maintain the stability of the rotation of the mounting mechanism and the clamping frame (1).

3. The license plate structure for a vehicle-mounted bicycle according to any one of claims 1 to 2, wherein the clamping frame (1) further comprises a first hinge seat (8), a second hinge seat (11), a third hinge seat (18), and a fourth hinge seat (22), wherein the first hinge seat (8) is disposed between an end of the first rotating arm and the clamping frame (1), allowing relative rotation between the first rotating arm and the clamping frame (1); the second hinge seat (11) is disposed between the first rotating arm and the mounting mechanism, allowing relative rotation between the first rotating arm and the mounting mechanism; the third hinge seat (18) is disposed between the second rotating arm and the clamping frame (1), allowing rotation between the second rotating arm and the clamping frame (1); and the fourth hinge seat (22) is disposed between the second rotating arm and the mounting mechanism, allowing relative rotation between the second rotating arm and the mounting mechanism.

4. The license plate structure for a vehicle-mounted bicycle according to any one of claims 1 to 3, wherein the first hinge seat (8), the second hinge seat (11), the third hinge seat (18), and the fourth hinge seat (22) are sequentially arranged at the back of the clamping frame (1).

5. The license plate structure for a vehicle-mounted bicycle according to any one of claims 1 to 4, further comprising a limiting slider (13), wherein the limiting slider (13) is disposed in a mounting slot of the mounting mechanism, and at least a part of the structure of the limiting slider (13) protrudes outside the mounting slot, and when the license plate structure for a vehicle-mounted bicycle is in an unfolded state, the limiting slider (13) can limit the relative rotation of the clamping frame (1) and the mounting mechanism,
preferably, the limiting slider (13) comprises a limiting piece (51) and a limiting spring (52), wherein the limiting piece (51) and the limiting spring (52) are in contact with each other, and the limiting spring (52) applies a pre-tightening force to the limiting piece (51), so that the limiting piece (51) automatically returns to an initial position.

6. The license plate structure for a vehicle-mounted bicycle according to any one of claims 1 to 5, wherein a first rotating arm (9) and a second rotating arm (10) are rotationally mounted in parallel and at intervals on the rear side of the clamping frame (1), and the other ends of the first rotating arm (9) and the second rotating arm (10) are both rotationally mounted on the bracket (7), and a connecting member for fixing the first rotating arm (9) and the second rotating arm (10) is disposed on the bracket (7),
preferably, an end of the first rotating arm (9) and an end of the second rotating arm (10) are rotationally mounted on the clamping frame (1) through a fourth hinge seat (22) and a second hinge seat (11) respectively, and the other ends of the first rotating arm (9) and the second rotating arm (10) are rotationally mounted on the bracket (7) through a first hinge seat (8) and a third hinge seat (18) respectively, and the first hinge seat (8), the fourth hinge seat (22), the third hinge seat (18), and the second hinge seat (11) are sequentially distributed from left to right.

7. The license plate structure for a vehicle-mounted bicycle according to any one of claims 1 to 6, wherein the connecting member comprises a limiting pin (14), a stepped through-hole (20) is formed in the bracket (7), the limiting pin (14) is elastically inserted into the stepped through-hole (20), a positioning through-hole (19) is formed at a position of the first rotating arm (9) corresponding to the stepped through-hole (20), and an end part of the limiting pin (14) is inserted into the positioning through-hole (19).

8. The license plate structure for a vehicle-mounted bicycle according to any one of claims 1 to 7, wherein the connecting member further comprises a limiting slider (13), a sliding groove extending to the upper ends of the second rotating arm (10) and the first rotating arm (9) is disposed on the upper end of the bracket (7), a fixed sealing plate (12) is disposed on the upper end of the sliding groove, the limiting slider (13) is elastically and slidably disposed in the sliding groove, and a side block (21) extending to the outside of the sliding groove and abutting the upper end surfaces of the second rotating arm (10) and the first rotating arm (9) is disposed on a side of the limiting slider (13),
preferably, a second spring (15) is pressed between the limiting slider (13) and the inner wall of the sliding groove, the upper end of the sliding groove is sealed by the fixed sealing plate (12), and the fixed sealing plate (12) is provided with a long groove for accommodating the the limiting slider (13) to enable positioning and sliding, and the extension direction of the long groove is the same as the compression direction of the second spring (15).

9. The license plate structure for a vehicle-mounted bicycle according to any one of claims 1 to 8, wherein the license plate fixing mechanism comprises at least two elastic clamping components, wherein the elastic clamping components are arranged at intervals on the back of the clamping frame (1), and the elastic clamping components extend from the back of the clamping frame (1) to the mounting recess of the clamping frame (1), and the license plate is fixed in the mounting recess by the elastic clamping components,
preferably, the two elastic clamping components of the license plate fixing mechanism are spaced apart from each other and are independent of each other, and when operating the license plate fixing mechanism, the elastic clamping components need to be operated separately and independently.

10. The license plate structure for a vehicle-mounted bicycle according to claim 9, wherein the elastic clamping components are arranged at an upper end portion or a lower end portion of the clamping frame (1), or the elastic clamping components are arranged at a left side end portion or a right side end portion of the clamping frame (1).

11. The license plate structure for a vehicle-mounted bicycle according to any one of claims 9 to 10, wherein each elastic clamping component comprises a side frame (6), a clamping block (3) arranged on the side frame (6), and a first spring (17), wherein the first spring (17) and the clamping block (3) have a pre-tightened elastic force, an end of the clamping block (3) is arranged in a track of the side frame (6), and the clamping block (3) can move back and forth (up and down) along the track of the side frame (6) within the side frame (6); the other end of the clamping block (3) extends into the mounting recess of the clamping frame (1), corresponding to the license plate to be installed, for limiting the movement of the license plate.

12. The license plate structure for a vehicle-mounted bicycle according to any one of claims 9 to 11, wherein the elastic clamping components and the clamping frame (1) form an adjustable mounting recess, and the license plate can be detachably installed in the mounting recess.

13. The license plate structure for a vehicle-mounted bicycle according to any one of claims 9 to 12, wherein the clamping frame (1) further comprises a clamping frame main body and a limiting protrusion arranged on the clamping frame main body, wherein the limiting protrusion is arranged on a side opposite to the clamping block (3), for limiting the displacement of the license plate,
preferably, the limiting protrusion is a fixing mechanism formed on an inner side of the mounting recess, and the limiting protrusion of the clamping frame (1) is directly opposite to the clamping block (3).

14. The license plate structure for a vehicle-mounted bicycle according to any one of claims 9 to 13, wherein the elastic clamping component further comprises an operating rod (314) and an operating handle (315) connected to the operating rod, wherein the operating handle (315) is connected to the operating rod (314), and the operating rod (314) is connected to the clamping block (3), for driving the connected clamping block (3) to move within the side frame (6) through the operating handle (315) and the operating rod (314).

15. The license plate structure for a vehicle-mounted bicycle according to any one of claims 1 to 14, wherein the mounting mechanism comprises a bracket (7), and a limiting pin (14) disposed on the bracket (7), and the mounting mechanism is fixed at a corresponding position of the vehicle frame (7) by the limiting pin (14).
